# EUROPÄISCHE PATENTSCHRIFT

(11) **EP 0 598 322 B1**
(45) Veröffentlichungstag und Bekanntmachung des Hinweises auf die Patenterteilung: **05.03.1997**
(21) Anmeldenummer: 93118228.1
(22) Anmeldetag: 10.11.1993
(51) Int. Cl.: B01D 17/032

(54) **Abscheideanlage**
Separator
Séparateur

(30) Priorität: 17.11.1992 DE 4238811; 10.05.1993 DE 4315502
(43) Veröffentlichungstag der Anmeldung: 25.05.1994
(73) Patentinhaber: Kessel, Bernhard, D-85101 Lenting (DE)
(72) Erfinder: Kessel, Bernhard, D-85101 Lenting (DE)
(74) Vertreter: Grünecker, Kinkeldey, Stockmair & Schwanhäusser Anwaltssozietät

(56) Entgegenhaltungen:
- EP-A- 0 495 386
- EP-A- 0 505 734
- DE-A- 3 514 157
- DE-A- 3 820 142
- DE-C- 440 977

## Beschreibung

Die Erfindung betrifft eine Abscheideanlage der im Oberbegriff des Patentanspruchs 1 angegebenen Art.

Bei einer aus DE-A 35 14 157 bekannten Abscheidenanlage ist der ständig geöffnete Schwimmstoffabzug ein umgekehrt U-förmiges, enges Rohr, das von einer obenliegenden Schwimmstoff-Zusammenführung des Abscheidebehälters zu einem Sammelbehälter führt. Der Zulauf zum Fangbehälter, der Ablauf vom Abscheidebehälter und das Niveau der Überströmleitung im Fangbehälter liegen höher als der Einlaß des Schwimmstoffabzugs. Eine Überlaufschwelle im Schwimmstoffabzug liegt jedoch höher als der Zulauf, der Ablauf und das Niveau der Überströmleitung. Die Schwimmstoffe werden aufgrund des Dichtegradienten bzw. der unterschiedlichen spezifischen Gewichte über die höherliegende Überlaufschwelle permanent ausgetragen, jedoch nur in dem durch den Dichteunterschied zwischen den Schwimmstoffen und dem Restwasser mit Rücksicht auf die Höhe der Überlaufschwelle erreichbaren Maß. Nach einer Unterbrechung des Zulaufs und abgesenktem Spiegel werden Schwimmstoffe nur unvollständig ausgetragen. Unterhalb der Überlaufschwelle im Schwimmstoffabzug zurücbleibende Schwimmstoffe setzen sich fest und verfestigen sich.

Bei einer aus DE-C-44 09 77 bekannten Abscheidevorrichtung für Benzol und Leichtöl aus Wasser wird ein extremer Höhenunterschied zwischen zwei Behältern benutzt, um aufgrund der Unterschiede der spezifischen Gewichte die leichtere Flüssigkeit auch dann abzuscheiden, wenn sie eigentlich ungewollt in den zweiten Behälter gelangt ist. Es liegt zwischen beiden Behältern nur eine einzige Überströmleitung vor, die am ersten Behälter ganz unten angeschlossen ist. Dieses Prinzip ist für Abscheideanlagen brauchbar, bei denen neben Schwimmstoffen auch Schwerstoffe aus Wasser auszuscheiden sind.

Gemäß EP-A-0 505 734 wird zum Abscheiden von Schwer- und Schwimmstoffen ein einziger Abscheidebehälter eingesetzt, dessen Zulauf und Reinwasserablauf abgesperrt werden, um abgeschiedene Schwimmstoffe auszutreiben. Zum Austreiben ist eine zusätzliche Einrichtung vorgesehen, mit der ein Druckfördermedium zuführbar ist, um die Schwimmstoffe herauszudrücken.

Eine aus DE-A-38 20 142, Fig. 5, bekannte Abscheidevorrichtung weist einen einzigen Behälter zum Abscheiden der Schwerstoffe und der Schwimmstoffe auf. Der Abzug für die Schwimmstoffe liegt wesentlich tiefer als der Zulauf und der Ablauf des Behälters. Zum Austreiben der Schwimmstoffe wird der Reinwasserablauf gesperrt oder gedrosselt, um bei weiterem Zulauf von Abwasser oder mit Hilfe des Wasserdrucks aus dem Trinkwassernetz die Schwimmstoffe herauszudrücken.

Bei einer aus dem Prospekt "LIPATOR" der Firma Passavant-Werke AG, 6209 Aarbergen, 1/92, bekannten Fettabscheideanlage mit einem einzigen, den Fangbehälter und den Abscheidebehälter in sich vereinigenden Hohlkörper liegt der Schwimmstoffabzug höher als der Ablauf und tiefer als der Zulauf. Zum Abziehen der Schwimmstoffe wird der Ablauf abgesperrt und vorübergehend ein Stau erzeugt, um die Schwimmstoffe mittes des hydrostatischen Drucks über den an sich absperrbaren, dann geöffneten Schwimmstoffabzug in bereitgestellte Sammelcontainer zu verdrängen. Wegen des zum Abziehen der Schwimmstoffe gesperrten Ablaufs kann der Abscheidebetrieb beeinträchtigt werden. Ferner läßt sich wegen der in einem gemeinsamen Hohlkörper ablaufenden Abscheidevorgänge von Schwimmstoffen und Schwerstoffen eine gegenseitige Beeinträchtigung der Abscheidevorgänge nicht vermeiden. Das Abziehen der Schwimmstoffe ist dadurch erschwert, daß allein das gestaute Abwasservolumen im Zulauf und im Ablauf gegebenenfalls nicht ausreicht, eine größere Schwimmstoffmenge herauszudrücken.

Bei einer ähnlichen Fettabscheideanlage gemäß EP-A- 0 495 386 werden zum Abziehen der Schwimmstoffe Zu- und Ablauf abgesperrt und bei geöffnetem Abzug Förderwasser von außen eingepumpt. Der Abscheidebetrieb ist dann unterbrochen.

Der Erfindung liegt die Aufgabe zugrunde, eine Abscheideanlage der eingangs genannten Art dahingehend zu verbessern, daß die Schwimmstoffe bei unbehindertem Betrieb der Abscheideanlage und bei Zulaufunterbrechungen problemlos und weitestgehend abziehbar sind.

Die gestellte Aufgabe wird erfindungsgemäß mit den im kennzeichnenden Teil des Patentanspruchs 1 angegebenen Merkmalen gelöst.

Die Schwimmstoffe werden bei unbehindertem Betrieb der Abscheideanlage und ohne Zufuhr von Wasser von außen nach Öffnen des Schwimmstoffabzuges herausgedrückt, weil im Fangbehälter ein großes Abwasservolumen für den notwendigen hydrostatischen Druck sorgt. Auch bei Betriebsunterbrechungen der Abscheideanlage oder nach Absinken des Spiegels im Fangbehälter bis unter das Niveau der Überströmleitung lassen sich die Schwimmstoffe noch problemlos und in vorbestimmtem Maß herausdrücken, weil dank der zusätzlichen Strömungsverbindung und der Lage des Anschlusses der Strömungsverbindung im Fangbehälter stets genügend Abwasservolumen bereitstellbar ist. Der Abzug der Schwimmstoffe kann somit nicht nur jederzeit, sondern in den zumeist vorherbestimmten Intervallen durchgeführt werden, unabhängig davon, ob gerade Abwasser zuläuft oder nicht, oder ob der Spiegel im Fangbehälter noch oberhalb des Niveaus der Überströmleitung liegt, oder nicht. Damit ist gewährleistet, daß die Schwimmstoffe stets möglichst frisch, d.h. mit guter Qualität, abgezogen, entsorgt oder einer Weiterverwendung zugeführt werden können. Die Handhabung ist denkbar einfach, weil außer dem Öffnen und Schließen des Schwimmstoffabzugs und der Überwachung des Schwimmstoffablaufs keine weiteren Tätigkeiten erforderlich sind.

Bei der Ausführungsform gemäß Anspruch 2 läßt sich die gesamte Schwimmstoffmenge auch dann problemlos austragen, wenn kein Abwasser in die Anlage läuft. Der Anschluß der Strömungsverbindung liegt so weit unten, daß zwischen ihm und dem Niveau der Überströmleitung so viel Abwasser bereitsteht, daß der gewünschte hydrostatische Druck zum Austreiben der Schwimmstoffe aufrechterhalten wird und das Abwasser im Abscheidebehälter beim Austreiben steigt, weil aus dem Fangbehälter Abwasser über die Strömungsverbindung nachläuft. Grundsätzlich wird der Anschluß der Strömungsverbindung nur so tief gesetzt, daß Schwerstoffe, die sich bereits abgesetzt haben, nicht in nennenswertem Maß in den Abscheidebehälter überwechseln.

Die Lage des Anschlusses der Strömungverbindung im Abscheidebehälter ist weniger kritisch, solange nur sichergestellt ist, daß das zum Ausdrücken der Schwimmstoffe notwendige Volumen aus dem Fangbehälter im Abscheidebehälter wirksam wird (Anspruch 3).

Grundsätzlich und auch für weitere, später erläuterte Funktionen kann es gemäß Anspruch 4 zweckmäßig sein, den Anschluß nahe dem Boden des Abscheidebehälters anzuordnen und den Anschluß der Strömungsverbindung im Fangbehälter ca. 20cm unterhalb des Niveaus der Überströmleitung vorzusehen.

Alternativ kann gemäß den Ansprüchen 5 und 6 die Strömungsverbindung eine festverlegte Leitung oder auch eine abnehmbare Leitung oder auch ein Schlauch sein. Sind beispielsweise mehrere Abscheidebehälter an einem gemeinsamen Fangbehälter angeschlossen, so kann eine abnehmbare Leitung je nachdem, aus welchem Abscheidebehälter die Schwimmstoffe abzuziehen sind, an diesen Abscheidebehälter angeschlossen werden.

Es empfiehlt es sich gemäß Anspruch 7, den Querschnitt der Strömungsverbindung in etwa gleich dem Querschnitt des Schwimmstoffabzugs zu machen, damit beim Schwimmstoffabzug keine Verzögerung in Kauf zu nehmen ist.

Besonders zweckmäßig ist die Ausführungsform gemäß Anspruch 8. Mit einem nach unten gebogenen Rohr- oder Schlauchkrümmer wird der Gefahr entgegengewirkt, daß der Fangbehälter ausgehebert wird. Sobald der Spiegel im Fangbehälter bis unter den Rohr- oder Schlauchkrümmer fällt, wird Luft angesaugt und ein Nachlaufen unterbunden.

Zweckmäßig ist auch die Ausbildung gemäß Anspruch 9. Während des Normalbetriebs der Abscheideanlage muß die Strömungsverbindung sogar abgesperrt sein, damit keine mit Schwerstoffen versetzte Abwasseranteile unter Umgehung der Überströmleitung in den Abscheidebehälter gelangen.

Besonders zweckmäßig ist die Ausführung gemäß Anspruch 10. Bei Betriebsunterbrechungen der Abscheideanlage kann der Spiegel im Fangbehälter unter das Niveau der Überströmleitung sinken. Im Fangbehälter befindliche Schwimmstoffe und auch Schwimmstoffe, die nachlaufendes Abwasser zuführt, können sich im Fangbehälter oben absetzen und aushärten und bei wieder einsetzendem Betrieb zu Störungen führen. In solchen Fällen kann mittels der Pumpe Reinwasser aus dem Abscheidebehälter in den Fangbehälter zurückgepumpt werden, um dort den Spiegel anzuheben, bis die Schwimmstoffe über die Überströmleitung in den Abscheidebehälter gebracht werden. Durch diese willkürlich eingeleitete Strömung werden Schwimmstoffe am Erstarren und Festsetzen gehindert und ggfs. aufgebrochen und fließfähig gemacht. Ferner läßt sich mit der Pumpe der Bodenbereich des Abscheidebehälters von sich dort fallweise sammelnden Schwerstoffen und Schwebstoffen reinigen, die in den Fangbehälter zurückgepumpt werden.

Besonders zweckmäßig ist ferner die Ausführungsform gemäß Anspruch 11. Mit der Hilfsleitung läßt sich, z.B. für Wartungsarbeiten, nicht nur der Abscheidebehälter leerpumpen, sondern auch der Spiegel im Fangbehälter bis unter das Niveau der Überströmleitung senken. Auf diese Weise läßt sich sogar der Spiegel im Fangbehälter bis unter die Höhe des Anschlusses der Strömungsverbindung absenken, nachdem zuvor der Abscheidebehälter zumindest zum Teil leergepumpt wurde. Weiterhin besteht die Möglichkeit, mittels der Pumpe den nach Ablassen gesammelter Schwerstoffe teilweise geleerten Fangbehälter wieder mit Reinwasser aus dem Abscheidebehälter zumindest teilweise zu füllen, um bei Betriebsaufnahme einer gegebenenfalls störenden Abscheidung und Verfestigung von Schwimmstoffen im Fangbehälter vorzubeugen und Frischwasser einzusparen, das sonst zum Auffüllen des Fangbehälters zugeführt werden müßte. Ferner läßt sich mittels der Pumpe ein Spül- oder Verwirbelungsvorgang im entleerten oder im Entleeren begriffenen Fangbehälters durchführen.

Gemäß Anspruch 12 ist es wichtig, daß die Pumpe eine im Stillstand durchströmbare Pumpe ist, damit beim Austragen der Schwimmstoffe ein Flüssigkeits-Aus- tausch nicht behindert wird. Gegebenenfalls ist es zweckmäßig, eine umsteuerbare Pumpe oder auch eine Pumpe mit Förderrichtung in den Abscheidebehälter vorzusehen, um beim Abziehen der Schwimmstoffe mittels Pumpenförderung nachhelfen zu können.

Gemäß Anspruch 13 ist es zweckmäßig, ein Mehrwegeventil vorzusehen, das mit mehreren Schaltstellungen die jeweils notwendigen oder gewünschten Strömungswege herstellt bzw. in einer Schaltstellung die Strömungsverbindung absperrt.

Schließlich sind bei einer weiteren Ausführungsform gemäß Anspruch 14, bei der der Fangbehälter bodenseitig über eine Ablaßleitung mit einem Schwerstoff-Sammelcontainer verbunden ist, weitere Maßnahmen zweckmäßig. Die für bestimmte Einsatzfälle benötigte Pumpe in der Strömungsverbindung oder eine separate erfüllt dann die zusätzliche Aufgabe, den üblicherweise mit einem hohen Abwasseranteil vorliegenden Schwerstoff-Schlamm im Sammelcontainer zu entwässern, um die Entsorgungskosten zu reduzieren und bei gegebener Größe des Sammelcontainers eine möglichst große Schwerstoffcharge entsorgen zu können. Das aus dem Sammelcontainer abgepumpte Wasser wird wieder in den Fangbehälter zurückgeführt, was deswegen zweckmäßig ist, weil dieses Abwasser wieder erhebliche Schwerstoffanteile enthält. Die Saugvorrichtung, die mittels der Pumpe betrieben wird, kann dann beispielsweise eine Ejektor-Saugdüse sein, die in einer Beipaßleitung der Strömungsverbindung vorgesehen ist, und an die Saugleitung angeschlossen wird. Gegebenenfalls ist für diesen Zweck auch eine separate Pumpe vorgesehen, die die Strömungsverbindung oder zwei getrennte Rückführleitungen zum Zuführen des Abwassers in den Fangbehälter benutzt.

Anhand der Zeichnung werden Ausführungsformen des Erfindungsgegenstandes erläutert. Es zeigen:
- Fig. 1: eine schematische Seitenansicht einer ersten Ausführungsform einer Abscheideanlage,
- Fig. 2: eine Seitenansicht einer zweiten Ausführungsform, und
- Fig. 2a: eine Detailvariante.

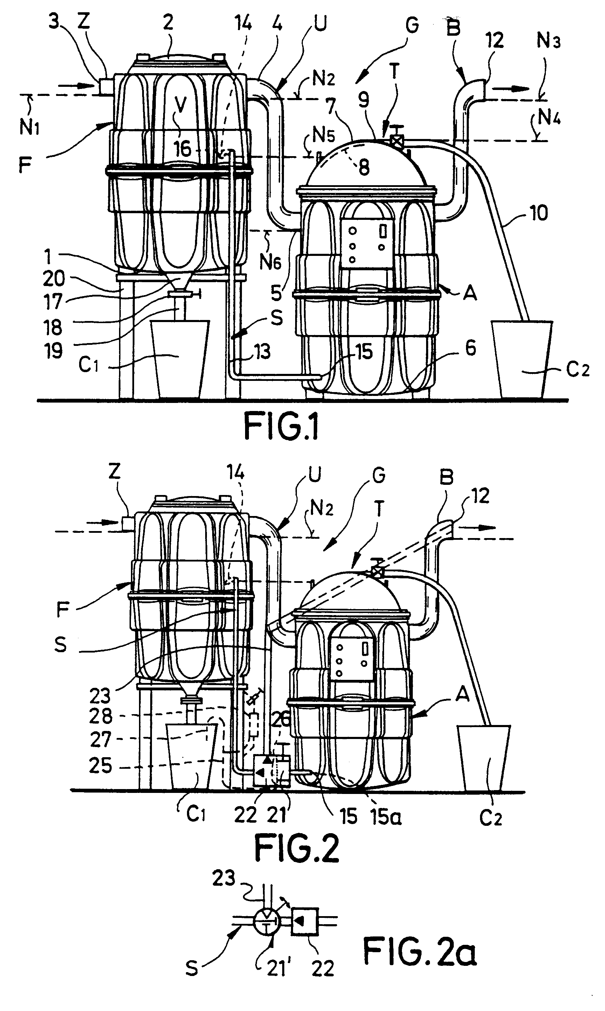

Eine Abscheideanlage G, insbesondere eine Abscheideanlage, gemäß Fig. 1 besteht aus einem oben geschlossenen Fangbehälter F für Schwerstoffe (Schlammfangbehälter) und aus einem in Durchströmrichtung nachgeordneten Abscheidebehälter A für Schwimmstoffe (Fettabscheidebehälter), die nach Art kommunizierender Gefäße miteinander verbunden sind. Im gezeigten Ausführungsbeispiel sind die beiden Behälter F, A in etwa gleich und gleich groß. Es ist jedoch denkbar, unterschiedlich große Behälter F, A zu verwenden. Ferner ist bei der gezeigten Ausführungsform nur ein Fangbehälter F und ein Abscheidebehälter A vorgesehen, obwohl einem Fangbehälter F auch mehrere parallel nachgeordnete Abscheidebehälter A zugeordnet werden können.

Der Fangbehälter F ist tonnenförmig ausgebildet, besitzt einen schwach bombierten Boden 1 und einen abnehmbaren Deckel 2. Mit Schwerstoffen und Schwimmstoffen belastetes Abwasser wird dem Fangbehälter F durch einen Zulauf Z zugeführt, dessen Mündung 3 auf einem hochgesetzten Niveau N1 liegt. Vom Fangbehälter F führt eine fallende Überströmleitung U zum Abscheidebehälter A, deren Querschnitt in etwa dem Querschnitt des Zulaufs Z entspricht. Ein Einlaß 4 der Überströmleitung U im Fangbehälter F liegt auf einem Niveau N2, das geringfügig unterhalb des Niveaus N1 liegt. Ein Anschluß 5 der Überströmleitung U an den Abscheidebehälter A liegt auf einem wesentlich tieferen Niveau N6. Dabei verläuft die Überströmleitung U im Inneren des Abscheidebehälters mit einem nicht dargestellten Rohrkrümmer schräg nach unten und/oder annähernd in Tangentialrichtung.

Der Abscheidebehälter A ist von tonnenförmiger Gestalt mit einem leicht bombierten Boden 6 und einem anstelle des Deckels 2 dicht angebrachten Dom 7. Der Dom 7 kann - wie gezeigt - kuppelförmig, aber auch (nicht gezeigt) kegelig oder anders ausgebildet sein. Sofern die Schwimmstoffe im Abwasser zum Erstarren neigen (Fette) und/oder die Anlage G im Freien auch bei tiefen, das Erstarren der Schwimmstoffe verursachenden Temperaturen benutzt wird, bei denen die gegebenenfalls im Abwasser vorliegende Temperatur nicht mehr zum Fließfähighalten der Schwimmstoffe ausreicht, empfiehlt sich eine bei 8 strichliert angedeutete Heizvorrichtung im oder am Dom 7.

Im Abscheidebehälter A ist oben ein Schwimmstoffabzug T vorgesehen, der bei der gezeigten Ausführungsform aus einem Auslaß 9 besteht, an den eine Ablaufleitung 10 angeschlossen ist. Beim oder im Schwimmstoffabzug T ist ein Absperrorgan 11 vorgesehen. Der Schwimmstoffabzug T befindet sich auf einem Niveau N4, das unterhalb des Niveaus N1 und auch - bei der gezeigten Ausführungsform - des Niveaus N2 liegt. Aus dem Abscheidebehälter A führt ein Ablauf B heraus, der an das weiterführende Kanalsystem angeschlossen ist und in etwa den gleichen Querschnitt wie die Überströmleitung U besitzt. Die Mündung des Ablaufes B befindet sich auf einem Niveau N3, das geringfügig unterhalb des Niveaus N2 liegt. Der Ablauf B ist - nicht gezeigt - im Inneren des Abscheidebehälters durch ein Fallrohr ergänzt, das sich bis in die Nähe des Bodens 6 erstreckt. Denkbar ist es auch, den Ablauf B im Inneren des Abscheidebehälters durch eine nach unten gezogene Abschirmwand zu umgeben, um das ablaufende Reinwasser zu zwingen, von unten her in den Ablauf B zu strömen.

Bei der gezeigten Ausführungsform liegen die Niveaus N1, N2 und N3 oberhalb des Niveaus N4 des Schwimmstoffabzugs, damit die Schwimmstoffe bei geöffnetem Schwimmstoffabzug T durch den hydrostatischen Druck in der Anlage G ausgetrieben werden.

Zusätzlich zur Überströmleitung U ist eine Strömungsverbindung S zwischen dem Fangbehälter F und dem Abscheidebehälter A vorgesehen oder herstellbar. Die zusätzliche Strömungsverbindung ist eine Leitung oder ein Schlauch 13 mit einem Anschluß 14 im Fangbehälter F und einem Anschluß 15 im Abscheidebehälter A. Der Querschnitt der Strömungsverbindung entspricht in etwa dem Querschnitt des Schwimmstoffabzugs T. Der Anschluß 14 liegt auf einem Niveau N5, das deutlich unterhalb des Niveaus N2 liegt, so daß zwischen den Niveaus N2 und N5 im Fangbehälter F ein Abwasser-Volumen V bereitstellbar ist, das in etwa der Menge der im Abscheidebehälter A oben abgeschiedenen und auszutragenden Schwimmstoffe entspricht. Der Anschluß 14 ist als nach unten gebogener Rohr- oder Schlauchkrümmer 16 ausgebildet. Der andere Anschluß 15 der Strömungsverbindung S im Abscheidebehälter A liegt direkt im Bereich des Bodens 6.

Die Niveauunterschiede ergeben sich bei den gezeigten, in etwa gleich großen und gleich geformten Behältern F, A dadurch, daß der Fangbehälter F auf einem Podest 20 und der Abscheidebehälter A auf dem Untergrund steht. Es wäre aber auch denkbar, den Abscheidebehälter A in eine Vertiefung zu setzen. Die Niveauunterschiede können aber auch dadurch erreicht werden, daß die Behälter F, A mit unterschiedlicher Höhe und/oder unterschiedlicher Form ausgebildet sind (z.B. ein schlanker, hoher Fangebehälter und ein breiter, niedriger Abscheidebehälter A).

Zum Entsorgen im Fangbehälter F abgeschiedener Schwerstoffe ist ein Sammelcontainer C1 vorgesehen, der bei der gezeigten Ausführungsform unter dem Fangbehälter F steht und über einen Ablaß 17, ein Absperrelement 18 und eine Ablaßleitung 19 befüllt werden kann. Die Ablaufleitung 10 ist an einen Sammelcontainer C2 für Schwimmstoffe anschließbar oder angeschlossen.

### Funktion:

Bei normalem Abscheidebetrieb läuft das Abwasser über den Zulauf Z zunächst in den Fangbehälter F, in dem der Spiegel mindestens auf der Höhe des Niveaus N2 liegt. Die Schwerstoffe sammeln sich wegen der Strömungsberuhigung und aufgrund ihres höheren spezifischen Gewichts auf dem Boden 1. Sie werden bei Bedarf in die Sammelcontainer C1 abgelassen und entsorgt. Mit Schwimmstoffen versetztes Abwasser läuft durch die Mündung 4 und die Überströmleitung U in den Abscheidebehälter A, der im Normalbetrieb ohne Freispiegel betrieben wird, da das Niveau N4 unterhalb des Niveaus N2 liegt. Dank einer Strömungsberuhigung und wegen der unterschiedlichen spezifischen Gewichte scheiden sich die Schwimmstoffe oben im Abscheidebehälter A ab. Unterhalb der Schwimmstoffe liegt Reinwasser vor, das über den Ablauf B in das weiterführende Kanalsystem oder einen nachgeordneten Sammelbehälter (nicht gezeigt) strömt. Der Schwimmstoffabzug T ist abgesperrt.

Nach einem vorbestimmten Intervall oder auch bei Bedarf werden die Schwimmstoffe abgezogen. Dies kann sowohl beim ungestörten Betrieb der Anlage G als auch bei Betriebsunterbrechungen erfolgen. Der Schwimmstoffabzug T wird geöffnet. Der hydrostatische Druck, der aufgrund des Niveauunterschieds zwischen den Niveaus N3 und N4 wirksam ist, drückt die fließfähigen oder mittels der Heizung 8 fließfähig gemachten Schwimmstoffe über die Ablaufleitung 10 in den Sammelcontainer C2. Zur optischen Überprüfung kann ein Schauglas vorgesehen sein (nicht gezeigt), an dem die Bedienungsperson erkennt, wann Reinwasse im Schwimmstoffabzug abzulaufen beginnt. Dann, oder wenn der Sammelcontainer S2 gefüllt ist, wird der Schwimmstoffabzug T wieder geschlossen.

Wird bei einer Betriebsunterbrechung der Schwimmstoffabzug T geöffnet, dann könnte der Spiegel im Fangbehälter F bis unter das Niveau N2 fallen. Das Abwasservolumen in der Überströmleitung U und im Ablauf B würde nicht ausreichen, die Schwimmstoffe herauszudrücken. Da jedoch das Volumen V im Fangbehälter F so vorherbestimmt ist, daß die Schwimmstoffe auch dann herausgedrückt werden, wenn kein Abwasser zuläuft, läßt sich das Abziehen der Schwimmstoffe auch dann problemlos weiter durchführen. Der hydrostatische Druck wird über die zusätzliche Strömungsverbindung S in den Abscheidebehälter A übertragen und das Abwasser kann über die Strömungsverbindung S in den Abscheidebehälter A überströmen, um das Entstehen eines Freispiegels im Abscheidebehälter A beim Schwimmstoffabzug zu unterbinden. Die Strömungsverbindung S wird erst für diesen Fall hergestellt oder geöffnet.

Die Abscheideanlage G gemäß Fig. 2 stimmt in ihren wesentlichen Komponenten mit der Abscheideanlage G von Fig. 1 überein. Zusätzlich ist in der Strömungsverbindung S ein Absperrorgan 21 gezeigt, mit dem die Strömungsverbindung S absperrbar ist, und das, z.B., dann geöffnet wird, wenn bei einer Betriebsunterbrechnung Schwimmstoffe abgezogen werden sollen. Ferner ist in Fig. 2 eine Pumpe 22 in der Strömungsverbindung S gezeigt, die vorzugsweise mit Förderrrichtung zum Fangbehälter F betreibbar ist, zweckmäßigerweise durch eine Fernsteuerung oder auch willkürlich ein- und ausschaltbar. Die Pumpe 22 ist zweckmäßigerweise eine im Stillstand durchströmbare Pumpe, z.B. eine Kreiselpumpe. Ferner ist in Fig. 2 eine Hilfsleitung 23 angedeutet, die von der Strömungsverbindung S zur Mündung 12 des Ablaufes B geführt ist. Die Hilfsleitung 23 ist an die Druckseite der Pumpe 22 angeschlossen.

Ferner ist in Fig. 2 angedeutet, daß an die Strömungsverbindung S bzw. deren Pumpe 22 (Saugseite 26 der Pumpe 22) eine Saugleitung 25 angeschlossen ist, die mit einer Saugsonde 27 in den Sammelcontainer C1 einführbar ist, um bei Ablassen von Schwerstoffen mitgenommenes Abwasser wieder in den Fangbehälter F zurückzupumpen. Alternativ (strichliert dargestellt) kann in der Strömungsverbindung S eine Saugvorrichtung 28 vorgesehen sein, an die die Saugleitung 25 anschließbar oder angeschlossen ist. Die Saugvorrichtung 28 ist beispielsweise eine Injektor-Saugdüse in einer Beipaßleitung mit Rücklaufsicherung oder Absperrorgan (nicht gezeigt), die mittels der Pumpe 22 und des aus dem Abscheidebehälter A zum Fangbehälter F gepumpten Reinwassers betreibbar ist. Es könnte an dieser Stelle auch eine separate Pumpe vorgesehen sein.

Gemäß Fig. 2a ist das Absperrelement 21' ein Mehrwege-Schieber, mit dem entweder die Strömungsverbindung S absperrbar oder auf Durchgang schaltbar ist, oder mit dem der Fangbehälter F von der Strömungsverbindung S abtrennbar und dafür die Hilfsleitung 23 mit dem Abscheidebehälter A verbindbar ist.

### Funktion:

Bei normalem Abscheidebetrieb und im Fangbehälter F oberhalb des Niveaus N2 liegendem Spiegel steht die Pumpe 22 und ist die Strömungsverbindung S abgesperrt, wie auch die Hilfsleitung 23.

Werden bei einer Betriebsunterbrechung Schwimmstoffe abgezogen, dann wird die Strömungsverbindung S durch Betätigen des Absperrorgans 21 geöffnet. Nach dem Abzug der Schwimmstoffe wird die Strömungsverbindung S wieder abgesperrt.

Wird es zu Wartungszwecken erforderlich, den Abscheidebehälter zu leeren, dann wird dessen Reinwasser über die Hilfsleitung 23 abgepumpt. Der Spiegel im Fangbehälter sinkt dadurch bis unter das Niveau N2, so daß kein Abwasser mehr in den Abscheidebehälter überströmt. Um zu vermeiden, daß eventuell im Abscheidebehälter abgeschiedene Schwerstoffe oder Schwebstoffe durch den Ablauf B über die Hilfsleitung 23 weggepumpt werden, kann zuvor mittels der Pumpe 22 über die Strömungsverbindung S ein Reinwasseranteil mit den Schwerstoffen und/oder Schwebstoffen in den Fangbehälter F übergepumpt werden.

Für den Fall, daß bei einer längeren Betriebsunterbrechung oder aus anderen Gründen der Spiegel im Fangbehälter F bis unter das Niveau N2 abgesunken sein sollte, kann über die Pumpe 22 und die geöffnete Strömungsverbindung S Reinwasser aus dem Abscheidebehälter A in den Fangbehälter F gepumpt werden, um den Spiegel darin wieder anzuheben und Schwimmstoffabsonderungen im Fangbehälter aufzubrechen und/oder über die Überströmleitung U in den Abscheidebehälter A zu bringen. In gleicher Weise ist es möglich, den Inhalt des Fangbehälters fallweise durchzumischen oder zu verwirbeln oder nach Entleeren des Fangbehälters diesen zu spülen bzw. in diesem wieder das notwendige Arbeitsniveau herzustellen.

## Patentansprüche

1. Abscheideanlage (G) für Schwimmstoffe gegebenenfalls Schwerstoffe aus Abwasser, insbesondere Fettabscheideanlage, mit wenigstens einem zulaufseitigen, oben geschlossenen Fangbehälter (F) für Schwerstoffe, der über eine Überströmleitung (U) mit wenigstens einem in Durchströmrichtung nachgeordneten, einen Reinwasser-Ablauf (B) aufweisenden, ebenfalls oben geschlossenen Abscheidebehälter (A) für Schwimmstoffe verbunden ist, und mit einem am Abscheidebehälter (A) obenliegenden Schwimmstoffabzug (T), über den Schwimmstoffe mittels des hydrostatischen Drucks des Abwassers austragbar sind, **dadurch gekennzeichnet**, daß der Schwimmstoffabzug (T) absperrbar ausgebildet ist und tiefer liegt als der Zulauf (Z) zum Fangbehälter (F) und die Mündung des Reinwasserablaufs (B) aus dem Abscheidebehälter (A), und daß zusätzlich zur Überströmleitung (U) zwischen einem Anschluß (14) im Fangbehälter (F) und einem Anschluß (15) im Abscheidebehälter (A) wenigstens eine Strömungsverbindung (S) vorgesehen ist, deren Anschluß (14) im Fangbehälter (F) unterhalb des Niveaus (N2) der Mündung der Überströmleitung (U) auf einem Niveau (N5) oberhalb dem Fangbehälterboden (1) angeordnet ist, das so weit unterhalb des Niveaus (N2) liegt, daß einerseits zwischen den Niveaus (N2, N5) im Fangbehälter (F) ein den hydrostatischen Druck zum Austreiben der Schwimmstoffe durch den Schwimmstoffabzug (T) aufrechthaltendes Abwasservolumen (V) bereitsteht, falls der Spiegel im Fangbehälter (F) auf das Niveau (N2) fällt, und daß andererseits im Fangbehälter (F) unten abgesetzte Schwerstoffe nicht in nennenswertem Maß über die Strömungsverbindung (S) in den Abscheidebehälter (A) überwechseln.

2. Abscheideanlage nach Anspruch 1, **dadurch gekennzeichnet**, daß der Anschluß (14) der Strömungsverbindung (S) so weit unterhalb des Niveaus (N2) der Überströmleitung (U) liegt, daß ein das vollständige Verdrängen der Schwimmstoffe durch den Schwimmstoffabzug (T) gewährleistendes Abwasservolumen (V) bereitstellbar ist.

3. Abscheideanlage nach den Ansprüchen 1 und 2, **dadurch gekennzeichnet**, daß im Abscheidebehälter (A) der andere Anschluß (15, 15a) der Strömungsverbindung (S) in einem Höhenbereich liegt, der unterhalb des Niveaus (N6) der Überströmleitung (U) im Abscheidebehälter (A) beginnt und nahe dessen Boden (6) endet.

4. Abscheideanlage nach Anspruch 3, **dadurch gekennzeichnet**, daß der Anschluß (14) der Strömungsverbindung (S) im Fangbehälter (S) unterhalb des Niveaus (N2), z.B. ca. 20 cm, (4) der Überströmleitung (U) und der andere Anschluß (15, 15a) im Abscheidebehälter (A) nahe dessen Boden (6) angeordnet ist.

5. Abscheideanlage nach den Ansprüchen 1 bis 4, **dadurch gekennzeichnet**, daß die Strömungsverbindung (S) eine zwischen beiden Behältern (AF) festverlegte Rohrleitung (13) oder ein fest verlegter Schlauch ist.

6. Abscheideanlage nach den Ansprüchen 1 bis 4, **dadurch gekennzeichnet**, daß die Strömungsverbindung (S) eine abnehmbare Leitung (13) oder ein abnehmbarer Schlauch ist.

7. Abscheideanlage nach wenigstens einem der Ansprüche 1 bis 6, **dadurch gekennzeichnet**, daß der Querschnitt der Strömungsverbindung (S) kleiner als der Querschnitt der Überströmleitung (U) und in etwa gleich dem Querschnitt des Schwimmstoffabzugs (T) ist.

8. Abscheideanlage nach einem der Ansprüche 1 bis 7, **dadurch gekennzeichnet**, daß der im Fangbehälter (F) liegende Anschluß (14) der Strömungsverbindung (S) von einem hakenförmig nach unten abgebogenen Rohr- oder Schlauchkrümmer (16) gebildet ist.

9. Abscheideanlage nach wenigstens einem der Ansprüche 1 bis 8, **dadurch gekennzeichnet**, daß in der Strömungsverbindung (S) wenigstens ein Absperrelement (21, 21') vorgesehen ist.

10. Abscheideanlage nach wenigstens einem der Ansprüche 1 bist 9, **dadurch gekennzeichnet**, daß in der Strömungsverbindung (S) mindestens eine Pumpe (22) vorgesehen ist, vorzugsweise fernsteuerbar und mit Förderrichtung zum Fangbehälter (F).

11. Abscheideanlage nach den Ansprüchen 9 und 10, **dadurch gekennzeichnet**, daß an der Druckseite der Pumpe (22) eine Hilfsleitung (23) anschließbar ist, die mit dem Ablauf (B) des Abscheidebehälters (A) verbindbar ist.

12. Abscheideanlage nach wenigstens einem der Ansprüche 9 bis 11, **dadurch gekennzeichnet**, daß die Pumpe (22) eine im Stillstand durchströmbare Pumpe, vorzugsweise eine Kreiselpumpe, ist.

13. Abscheideanlage nach einem der Ansprüche 11 und 12, **dadurch gekennzeichnet**, daß in der Strömungsverbindung (S) an der Druckseite der Pumpe (22) ein Mehrwegeventil (21'), vorzugsweise ein Dreiwegeschieber, vorgesehen ist, an das die Hilfsleitung (23) angeschlossen ist.

14. Abscheideanlage nach wenigstens einem der Ansprüche 1 bis 13, wobei der Fangbehälter (F) bodenseitig über eine Ablaßleitung (19) mit einem Schwerstoff-Sammelcontainer (C1) verbindbar ist, **dadurch gekennzeichnet**, daß eine in den Sammelcontainer (C) geführte oder führbare Absaugleitung (25) an die Saugseite der Pumpe (22) oder an eine mittels der Pumpe (22) betreibbare Saugvorrichtung (28) oder eine separate Pumpe anschließbar ist, mit der aus dem Sammelcontainer (C1) mit Schwerstoffen abgelassenes Abwasser in den Fangbehälter (F) rückführbar ist.

## Claims

1. Separator (G) for separating floating matter and possibly heavy matter from waste water, particularly a grease separator, having at least one collecting tank (F) for heavy substances at the inlet end which is closed at the top and which is connected via an overflow pipe (U) to at least one separating tank (A) for floating matter, also closed at the top, which is arranged after said collecting tank (F) in the direction of flow and has a clean water outlet (B), and having a floating matter outlet (T) at the top of the separating tank (A), through which floating matter can be discharged by means of the hydrostatic pressure of the waste water, characterised in that the floating matter outlet (T) is constructed so as to be capable of being closed off and is located at a greater depth than the inlet (Z) to the collecting tank (F) and the mouth of the clean water outlet (B) from the separating tank (A), and in addition to the overflow pipe (U) at least one flow connection (S) is provided between a connector (14) in the collecting tank (F) and a connector (15) in the separating tank (A), the connector (14) of which in the collecting tank (F) is arranged below the level (N2) of the mouth of the overflow pipe (U) at a level (N5) above the bottom of the collecting tank (1) which is so far below the level (N2) that, on the one hand, there is a volume (V) of waste water between the levels (N2, N5) in the catching container (F) sufficient to maintain the hydrostatic pressure to force the floating matter through the floating matter outlet (Y) if the level in the collecting tank (F) drops to the level (N2), and so that, on the other hand, any heavy matter deposited at the bottom of the collecting tank (F) will not be transferred to any appreciable extent into the separating tank (A) via the flow connection (S).

2. Separator according to claim 1, characterised in that the connector (14) for the flow connection (S) is so far below the level (N2) of the overflow pipe (U) that a sufficient volume (V) of waste water can be held in readiness to guarantee total displacement of the floating matter through the floating matter outlet (T).

3. Separator according to claims 1 and 2, characterised in that, in the separating tank (A), the other connector (15, 15a) for the flow connection (S) is located within a vertical range which starts below the level (N6) of the overflow pipe (U) in the separating tank (A) and ends close to its bottom (6).

4. Separator according to claim 3, characterised in that the connector (14) for the flow connection (S) in the collecting tank (S) is arranged below the level (N2), e.g. about 20 cm, (4) of the overflow pipe (U) and the other connector (15, 15a) in the separating tank (A) is arranged close to its bottom (6).

5. Separator according to claims 1 to 4, characterised in that the flow connection (S) is a pipe (13) fixed between the two containers (AF) or a fixedly mounted hose.

6. Separator according to claims 1 to 4, characterised in that the flow connection (S) is a removable pipe (13) or a removable hose.

7. Separator according to at least one of claims 1 to 6, characterised in that the cross section of the flow connection (S) is smaller than the cross section of the overflow pipe (U) and is substantially equal to the cross section of the floating matter outlet (T).

8. Separator according to one of claims 1 to 7, characterised in that the connector (14) for the flow connection (S) located in the collecting tank (F) is formed by an elbowed pipe or hose (16) bent downwardly in a hook shape.

9. Separator according to at least one of claims 1 to 8, characterised in that at least one blocking member (21, 21') is provided in the flow connection (S).

10. Separator according to at least one of claims 1 to 9, characterised in that at least one pump (22) is provided in the flow connection, preferably remotely controllable and delivering in the direction of the collecting tank (F).

11. Separator according to claims 9 and 10, characterised in that an auxiliary pipe (23) which can be connected to the outlet (B) of the separating tank (A) may be attached to the delivery side of the pump (22).

12. Separator according to at least one of claims 9 to 11, characterised in that the pump (22) is of a kind which permits flow when stationary, preferably a rotary pump.

13. Separator according to one of claims 11 and 12, characterised in that a multi-way valve (21'), preferably a three-way slide valve, is provided in the flow connection (S) at the delivery side of the pump (22), the auxiliary pipe (23) being connected to said valve.

14. Separator according to at least one of claims 1 to 13, wherein the collecting tank (F) is connectable at the bottom to a heavy matter collecting container (C1) via an outlet pipe (19), characterised in that a suction pipe (25) passing into or capable of being passed into the collecting container (C) is connectable to the intake side of the pump (22) or to a suction device (28) actuable by means of the pump (22) or to a separate pump, by means of which any waste water containing heavy matter released from the collecting container (C1) can be recycled into the collecting tank (F).

## Revendications

1. Séparateur (G) de matières surnageantes, et éventuellement de matières lourdes contenues dans des eaux usées, notamment séparateur de graisse, comprenant au moins un récipient de dépôt (F) pour des matières lourdes, qui est situé côté arrivée, est fermé en haut et est relié par une conduite de passage (U) à au moins un récipient séparateur (A) pour des matières surnageantes qui est disposé en aval dans le sens d'écoulement, comporte une évacuation d'eau pure (B) et est également fermé en haut, et comprenant un extracteur de matières surnageantes (T) qui est situé en haut sur le récipient séparateur (A) et permet d'évacuer des matières surnageantes à l'aide de la pression hydrostatique des eaux usées, **caractérisé** en ce que l'extracteur de matières surnageantes (T) est réalisé de manière à pouvoir être bloqué et est situé plus bas que l'arrivée (Z) dans le récipient de dépôt (F) et que l'embouchure de l'évacuation d'eau pure (B) hors du récipient séparateur (A) et qu'il est prévu, en plus de la conduite de passage (U), entre un raccord (14) dans le récipient de dépôt (F) et un raccord (15) dans le récipient séparateur (A), au moins une communication d'écoulement (S) dont le raccord (14) dans le récipient de dépôt (F) est disposé au-dessous du niveau (N2) de l'embouchure de la conduite de passage (U), à un niveau (N5) au-dessus du fond (1) du récipient de dépôt qui se situe à une distance telle au-dessous du niveau (N2) que d'une part on dispose dans le récipient de dépôt (F), entre les niveaux (N2, N5), d'un volume d'eaux usées (V) maintenant la pression hydrostatique pour expulser les matières surnageantes par l'extracteur de matières surnageantes (T), dans le cas où le niveau dans le récipient de dépôt (F) descend au niveau (N2), et que d'autre part, des matières lourdes déposées en bas dans le récipient de dépôt (F) ne passent pas en quantité notable dans le récipient séparateur (A) par la communication d'écoulement (S).

2. Séparateur selon la revendication 1, **caractérisé** en ce que le raccord (14) de la communication d'écoulement (S) se trouve à une distance telle au-dessous du niveau (N2) de la conduite de passage (U) que l'on peut obtenir un volume d'eaux usées (V) garantissant le refoulement total des matières surnageantes par l'extracteur de matières surnageantes (T).

3. Séparateur selon les revendications 1 et 2, **caractérisé** en ce que dans le récipient séparateur (A), l'autre raccord (15, 15a) de la communication d'écoulement (S) se trouve à une hauteur qui débute au-dessous du niveau (N6) de la conduite de passage (U) dans le récipient séparateur (A) et se termine à proximité du fond (6) de ce dernier.

4. Séparateur selon la revendication 3, **caractérisé** en ce que le raccord (14) de la communication d'écoulement (S) dans le récipient de dépôt (S) est disposé au-dessous du niveau (N2), par exemple à environ 20 cm, de la conduite de passage (U) et l'autre raccord (15, 15a) dans le récipient séparateur (A) est disposé à proximité du fond (6) de ce dernier.

5. Séparateur selon les revendications 1 à 4, **caractérisé** en ce que la communication d'écoulement (S) est une canalisation (13) fixe entre les deux récipients (A, F) ou un tuyau fixe.

6. Séparateur selon les revendications 1 à 4, **caractérisé** en ce que la communication d'écoulement (S) est une conduite (13) amovible ou un tuyau amovible.

7. Séparateur selon au moins l'une des revendications 1 à 6, **caractérisé** en ce que la section transversale de la communication d'écoulement (S) est inférieure à la section transversale de la conduite de passage (U) et est sensiblement égale à la section transversale de l'extracteur de matières surnageantes (T).

8. Séparateur selon l'une des revendications 1 à 7, **caractérisé** en ce que le raccord (14), situé dans le récipient de dépôt (F), de la communication d'écoulement (S) est formé par un coude de tube ou de tuyau (16) coudé vers le bas en forme de crochet.

9. Séparateur selon au moins l'une des revendications 1 à 8, **caractérisé** en ce que au moins un élément d'arrêt (21, 21') est prévu dans la communication d'écoulement (S).

10. Séparateur selon au moins l'une des revendications 1 à 9, **caractérisé** en ce que au moins une pompe (22), de préférence commandable à distance et refoulant en direction du récipient de dépôt (F), est prévue dans la communication d'écoulement (S).

11. Séparateur selon les revendications 9 et 10, **caractérisé** en ce qu'une conduite auxiliaire (23), qui peut être reliée à l'évacuation (B) du récipient séparateur (A), peut être raccordée au côté refoulement de la pompe (22).

12. Séparateur selon au moins l'une des revendications 9 à 11, **caractérisé** en ce que la pompe (22) est une pompe pouvant être parcourue par un fluide à l'arrêt, de préférence une pompe centrifuge.

13. Séparateur selon l'une des revendications 11 et 12, **caractérisé** en ce que dans la communication d'écoulement (S), sur le côté refoulement de la pompe (22), il est prévu une soupape à plusieurs voies (21'), de préférence un tiroir à trois voies, auquel (à laquelle) est raccordée la conduite auxiliaire (23).

14. Séparateur selon au moins l'une des revendications 1 à 13, dans lequel le récipient de dépôt (F) peut être relié, côté fond, à un conteneur de collecte de matières lourdes (C1) par l'intermédiaire d'une conduite d'écoulement (19), et **caractérisé** en ce qu'une conduite d'aspiration (25), dirigée ou pouvant être dirigée dans le conteneur de collecte (C), peut être raccordée au côté aspiration de la pompe (22) ou à un dispositif d'aspiration (28) pouvant être actionné au moyen de la pompe (22) ou à une pompe séparée, pour ramener des eaux usées évacuées avec des matières lourdes, du conteneur de collecte (C1) dans le récipient de dépôt (F).
